# EUROPÄISCHE PATENTSCHRIFT

(11) **EP 0 281 059 B1**
(45) Veröffentlichungstag und Bekanntmachung des Hinweises auf die Patenterteilung: **01.12.1993**
(21) Anmeldenummer: 88103014.2
(22) Anmeldetag: 29.02.1988
(51) Int. Cl.: G07F 7/10, H04L 9/00

(54) **Datenaustauschsystem mit mehreren jeweils eine Chipkarten-Leseeinrichtung enthaltenden Benutzerterminals**
Data exchange system with a plurality of user terminals, each including an IC card reader
Système pour l'échange de données avec plusieurs terminaux d'utilisation comportant chacun un dispositif de lecture de cartes à circuit intégré

(30) Priorität: 04.03.1987 DE 3706958
(43) Veröffentlichungstag der Anmeldung: 07.09.1988
(73) Patentinhaber: Siemens Nixdorf Informationssysteme Aktiengesellschaft, 33102 Paderborn (DE)
(72) Erfinder: Kruse, Dietrich, D-8012 Ottobrunn (DE); Beutelspacher, Albrecht, Prof., D-8012 Ottobrunn (DE); Kersten, Annette-Gabrielle, D-6200 Wiesbaden (DE)
(74) Vertreter: Fuchs, Franz-Josef, Dr.-Ing.

(56) Entgegenhaltungen:
- EP-A- 0 063 794
- EP-A- 0 140 388
- EP-A- 0 166 541
- EP-A- 0 198 384

## Beschreibung

### Die Erfindung betrifft ein Datenaustauschsystem gemäß den Merkmalen des Oberbegriffs des Anspruchs 1.

In modernen Datenverarbeitungs- und Kommunikationssystemen spielt der Schutz der Daten eine immer wichtigere Rolle. Die Qualität eines Systems in bezug auf einen ausreichenden Datenschutz hängt dabei entscheidend davon ab, inwieweit es gelingt, daß der Zugriff zum System nur für berechtigte Personen möglich ist und umgekehrt nicht berechtigte Personen mit absoluter Sicherheit ausgesperrt bleiben. Eine einfache wenn auch nicht absolut sichere Möglichkeit zur Überprüfung der Zugriffsberechtigung zu einem System sind zum Beispiel sogenannte Paßwörter, die nur dem berechtigten Benutzer bekannt und die vom Benutzer beliebig oft geändert werden können. Da bei Paßwörtern die Gefahr besteht, daß sie von Unbefugten ausgespäht oder abgehört werden können, sind zusätzliche Sicherungsmaßnahmen unverzichtbar. Eine dieser Maßnahmen ist zum Beispiel die Ver- und Entschlüsselung der übertragenen Information, eine Maßnahme, die bei Datenverarbeitungssysemen unter anderem auch mit Hilfe der Chipkarte realisierbar ist (Z.B. EP-A-63794). Mit der zunehmenden Einbeziehung der Chipkarte in Datenverarbeitungssysteme entsteht andererseits wieder ein zusätzliches Sicherheitsrisiko, weil Chipkarten relativ leicht verlorengehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe, befugt zu sein, an geheime Informationen im System gelangen kann. Eine wesentliche Voraussetzung für die Authentifikation ist ein persönliches, nicht kopierbares Merkmal des Teilnehmers. Dieses nichtkopierbare Merkmal des Teilnehmers wird mit Hilfe eines geheimen Schlüssels für die Ver- und Entschlüsselung erreicht, der den beiden Partnern, das heißt einerseits der Chipkarte und andererseits dem System, und zwar nur diesen beiden Partnern bekannt ist.

In einem POS-Banking-System auf Chipkartenbasis wird beispielsweise davon ausgegangen, daß geheime Daten im Kassenterminal in einem eigenen Sicherheitsmodul, zum Beispiel in einer sogenannten Sicherheitschipkarte gespeichert werden. Bei der Verwendung eines symmetrischen Verschlüsselungsalgorithmus muß in allen Terminals der gleiche geheime Terminalschlüssel existieren. Dieser Schlüssel wird benötigt, um aus der Kartenidentifizierungsnummer einer Kundenkarte einen gemeinsamen Kommunikationsschlüssel zu berechnen. Die Existenz eines universellen geheimen Schlüssels im Sicherheitsmodul bzw. in der Sicherheitschipkarte jedes POS-Terminals eines Gesamtsystems ist aber ein äußerst kritischer Punkt und gewissermaßen die Schwachstelle des Systems. Es sind deshalb bereits mehrere Schutzmaßnahmen überlegt worden, die das Bekanntwerden eines geheimen Globalschlüssels erschweren. Gemäß einer ersten Schutzmaßnahme gibt es anstelle eines einzigen geheimen Globalschlüssels K eine Serie von n verschiedenen Globalschlüsseln Kl, ..., Kn und dementsprechend unterschiedeliche Terminaltypen. Bei einem eventuellen Bekanntwerden eines dieser Schlüssel wird somit nicht das gesamte System gefährdet. Allerdings muß eine Kundenkarte auch n verschiedene Schlüssel KKl, ... KKn enthalten, von denen an einem bestimmten Terminal nur jeweils ein einziger gültig ist. Bei einer zweiten Schutzmaßnahme sind ebenfalls mehrere Schlüssel Kl, ..., Kn vorgesehen, die n gewissen Zeitabständen zyklisch gewechselt werden. Auf diese Weise ergeben sich zum Beispiel mehrere Terminalschlüssel Klp, ..., Knp, die in der Zeitphase p gültig sind. In einer Kundenchipkarte müssen dann selbstverständlich auch die dazugehörigen Kundenschlüssel KKlp, ..., KKnp vorhanden sein.

Der vorliegenden Erfindung liegt nun die Aufgabe zugrunde, für die Sicherung eines globalen Geheimschlssels einen möglichst optimalen Lösungsweg zu finden, der die Ausforschung des jeweils gültigen Globalschlüssels praktisch unmöglich macht.

Die Lösung dieser Aufgabe ergibt sich erfindungsgemäß durch die kennzeichnenden Merkmale des Anspruchs 1. Vorteilhafte Weiterbildungen der Erfindung sind in den Unteransprüchen angegeben. Durch die Aufsplittung des Geheimschlüssels in zwei Teilkomponenten, von denen eine Teilkomponente variabel ist, ergeben sich bei der regelmäßigen Neubildung entsprechend unterschiedliche neue Geheimschlüssel, so daß auch im Falle einer Ausforschung eines Schlüssels dieser ausgeforschte Schlüssel sehr bald unaktuell und damit unbrauchbar sein wird.

Ein Ausführungsbeispiel der Erfindung wird im folgenden anhand der Zeichnung näher erläutert. Dabei zeigen
- FIG 1: eine Schaltungsanordnung zur Generierung eines geheimen Globalschlüssels aus zwei Teilkomponenten
- FIG 2: eine Variante zur Schaltung nach FIG 1 bezüglich einer Teilkomponente.

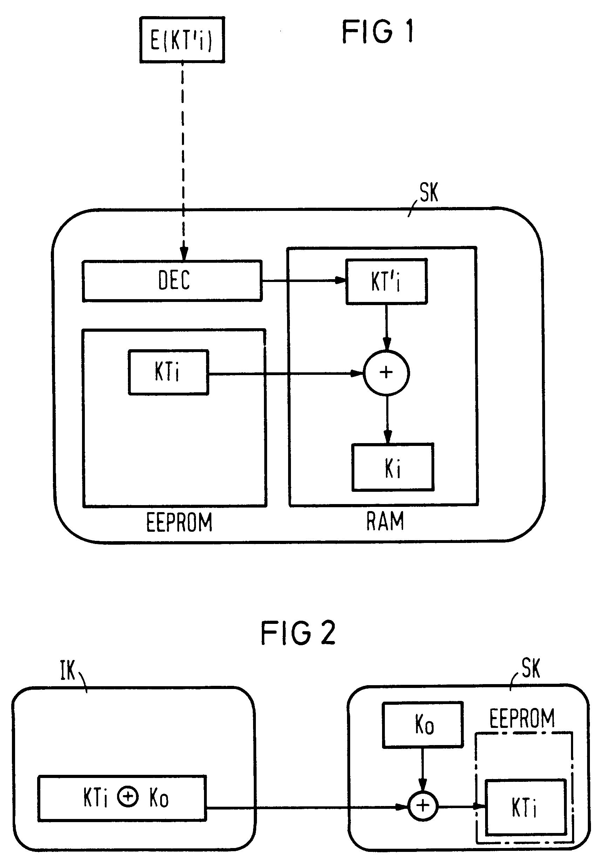

Die FIG 1 zeigt die für die Erläuterung der Erfindung wesentlichen Merkmale einer Sicherheitschipkarte SK in einem Benutzerterminal. Dem Ganzen liegt die Überlegung zugrunde, daß ein Globalschlüssel aus Sicherheitsgründen zunächst nicht komplett im Terminal gespeichert sein soll. Aus diesem Grund ist eine Aufsplittung des in der Sicherheitskarte hinterlegten geheimen Globalschlüssels Ki in zwei terminalspezifische Teilkomponenten KTi und KTʹi vorgesehen. Die erste Teilkomponente KTi steht dabei geschützt in einem löschbaren programmierbaren Lesespeicher EEPROM, während die zweite Teilkomponente KTʹi im Rahmen der täglichen Terminalanmeldungsprozedur in das Sicherheitsmodul des Terminals, das heißt in die Sicherheitskarte SK übertragen wird. Letzteres geschieht in der Weise, daß eine verschlüsselte zweite Teilkomponente E(KTʹi) einer Decodierstufe DEC zugeführt wird, deren decodiertes Ausgangssignal als zweite Teilkomponente KTʹi in einem ersten Teilbereich eines Schreib-Lese-Speichers RAM abgespeichert wird. Aus der im Lesespeicher EEPROM hinterlegten ersten Teilkomponente KTi und der in den Schreib-Lese-Speicher RAM übertragenen zweiten Teilkomponente KTʹi wird schließlich der vollständige Geheimschlüssel Ki errechnet und das Ergebnis in einem zweiten Teilbereich des Schreib-Lese-Speichers RAM hinterlegt.

Die FIG 2 zeigt eine Variante zur Schaltung nach FiG 1 insofern, als die erste Teilkomponente KTi nicht a priori im Terminal verfügbar ist, sondern erst im Rahmen der Erstinbetriebnahme eines POS-Terminals generiert wird. Für diese Prozedur ist eine sogenannte Initialisierungschipkarte IK erforderlich. Arbeitet das Terminal zum Beispiel mit einer Sicherheitskarte SK, so wird in diese bei der Personalisierung ein Hilfsschlüssel Ko eingetragen. Mit Hilfe dieses Hilfsschlüssels Ko wird nun ein sogenannter Prä-Schlüssel KTi + Ko errechnet und in die Initialisierungschipkarte IK eingetragen. Nach gegenseitiger Authentifizierung zwischen der Sicherheitskarte SK und der Initialisierungschipkarte IK wird dieser Prä-Schlüssel KTi + Ko offen von der Initialisierungschipkarte IK an die Sicherheitskarte SK übergeben. Dort wird schließlich aus dem Prä-Schlüssel KTi + Ko und dem bereits vorher hinterlegten Hilfsschlüssel Ko die erste Teilkomponente KTi berechnet und im Lesespeicher EEPROM der Sicherheitskarte SK eingetragen. Ob die auf diese Weise erfolgte Generierung der ersten Teilkomponente KTi des Globalschlüssels tatsächlich fehlerfrei abgelaufen ist, kann anschließend mit einer Testchipkarte überprüft werden.

## Patentansprüche

1. Datenaustauschsystem mit mehreren, jeweils eine Chipkarten-Leseeinrichtung enthaltenden Benutzerterminals, bei denen in einem Sicherheitsmodul (Sk) ein für alle Benutzerterminals gleicher Geheimschlüssel (Ki) hinterlegt ist, **dadurch gekennzeichnet,** daß der Geheimschlüssel (Ki) aus zwei Teilkomponenten (KTi, KTʹi) gebildet ist, von denen die eine (KTi) in einem löschbaren programmierbaren Lesespeicher (EEPROM) hinterlegt ist, daß für die zweite Teilkomponete (KTʹi) ein verschlüsselter Datenblock (E(KTʹi)) von außen an eine im Sicherheitsmodul vorgesehene Decodiereinrichtung (DEC) übertragen wird, deren entschlüsseltes Ausgangssignal als zweite Teilkomponente (KTʹi) in einem ersten Teilbereich eines im Sicherheitsmodul vorhandenen Schreib-Lese-Speichers (RAM) abgespeichert wird und daß die beiden Teilkomponenten (KTi, KTʹi) miteinander verknüpft und das Ergebnis als Gesamtschlüssel (Ki) in einem zweiten Teilbereich des Schreib-Lese-Speichers (RAM) abgespeichert wird.

2. Datenaustauschsystem nach Anspruch 1, **dadurch gekennzeichnet,** daß zur Generierung der ersten Teilkomponente (KTi) zunächst ein Hilfsschlüssel (Ko) im Sicherheitsmodul abgespeichert wird, daß aus diesem Hilfsschlüssel (Ko) und der ersten Teilkomponente (KTi) ein Prä-Schlüssel (KTi + Ko) errechnet und in eine Initialisierungskarte (IK) eingetragen wird und daß nach gegenseitiger Authentifizierung zwischen dem Sicherheitsmodul und der Initialisierungskarte (IK) und nach Übertragung des Prä-Schlüssels in das Sicherheitsmodul aus dem Prä-Schlüssel (KTi + Ko) und dem Hilfsschlüssel (Ko) die erste Teilkomponente (KTi) errechnet und im löschbaren programmierbaren Lesespeicher (EEPROM) eingetragen wird.

3. Dastenaustauschsystem nach Anspruch 1 oder 2, **dadurch gekennzeichnet,** daß das Sicherheitsmodul als steckbare Sicherheitskarte (SK) ausgebildet ist.

## Claims

1. Data exchange system having a plurality of user terminals each containing a chip card reading device, in which a secret cipher (Ki) which is identical for all user terminals is stored in a security module (SK), characterised in that the secret cipher (Ki) is formed from two sub-components (KTi, KT'i), one of which (KTi) is stored in an erasable programmable read-only memory (EEPROM), in that an encrypted data block (E(KT'i)) is transmitted from the outside for the second sub-component (KT'i) to a decoder means (DEC) provided in the security module, the decrypted output signal of which is stored as second sub-component (KT'i) in a first sub-area of a read-write memory (RAM) provided in the security module, and in that the two sub-components (KTi, KT'i) are combined with one another and the result is stored as the overall cipher (Ki) in a second sub-area of the read-write memory (RAM).

2. Data exchange system according to Claim 1, characterised in that for generating the first sub-component (KTi), first of all an auxiliary cipher (Ko) is stored in the security module, in that a pre-cipher (KTi + Ko) is calculated from said auxiliary cipher (Ko) and the first sub-component (KTi) and is entered in an initialisation card (IK), and in that following mutual authentication between the security module and the initialisation card (IK) and following transmission of the pre-cipher into the security module, the first sub-component (KTi) is calculated from the pre-cipher (KTi + Ko) and the auxiliary cipher (Ko) and is entered in the erasable programmable read-only memory (EEPROM).

3. Data exchange system according to Claim 1 or 2, characterised in that the security module is designed as a plug-in security card (SK).

## Revendications

1. Système d'échange de données comportant plusieurs terminaux d'utilisateurs contenant chacun un dispositif de lecture de cartes à puce, et dans lesquels un code secret (Ki) identique pour tous les terminaux d'utilisateurs est mémorisé dans un module de sécurité (SK), caractérisé par le fait que le code secret (Ki) est formé de deux composantes partielles (KTi, KT'i), dont l'une (KTi) est mémorisée dans une mémoire de lecture effaçable et programmable (EEPROM), que pour la seconde composante partielle (KT'i), un bloc codé de données (E(KT'i)) est transmis de l'extérieur à un dispositif de décodage (DEC) prévu dans le module de sécurité et dont le signal de sortie décodé est mémorisé en tant que seconde composante partielle (KT'i) dans une première zone partielle d'une mémoire d'enregistrement-lecture (RAM) présente dans le module de sécurité, et que les deux composantes partielles (KTi, KT'i) sont combinées entre elles et que le résultat est mémorisé sous la forme d'un code total (Ki), dans une seconde zone partielle de la mémoire d'enregistrement-lecture (RAM).

2. Dispositif d'échange de données suivant la revendication 1, caractérisé par le fait que pour la production de la première composante partielle (KTi), un code auxiliaire (Ko) est tout d'abord mémorisé dans le module de sécurité, qu'un code préalable (KTi + Ko) est calculé à partir de ce code auxiliaire (Ko) et de la première composante partielle (KTi) et est introduit dans une carte d'initialisation (IK) et qu'après authentification réciproque entre le module de sécurité et la carte d'initialisation (IK) et après transfert du code préalable dans le module de sécurité, la première composante partielle (KTi) est calculée à partir du code préalable (KTi + Ko) et du code auxiliaire (Ko) et est introduit dans la mémoire de lecture effaçable et programmable (EEPROM).

3. Système d'échange de données suivant la revendication 1 ou 2, caractérisé par le fait que le module de sécurité est agencé sous la forme d'une carte de sécurité enfichable (SK).
